# EUROPEAN PATENT SPECIFICATION

(11) **EP 2 192 743 B1**
(45) Date of publication and mention of the grant of the patent: **19.10.2011**
(21) Application number: 08784052.6
(22) Date of filing: 20.08.2008
(51) Int. Cl.: H04L 29/06

(54) **A METHOD AND A SYSTEM FOR FAILURE PROTECTION OF LAYER 2 CONTROL CONNECTION**
VERFAHREN UND SYSTEM FÜR AUSFALLSCHUTZ EINER SCHICHT-2-STEUERUNGSVERBINDUNG
PROCÉDÉ ET SYSTÈME DE PROTECTION CONTRE LES DÉFAILLANCES D'UNE CONNEXION DE COMMANDE DE NIVEAU 2

(30) Priority: 22.08.2007 CN 200710076514
(43) Date of publication of application: 02.06.2010
(73) Proprietor: Huawei Technologies Co., Ltd., Longgang District, Shenzhen Guangdong 518129 (CN)
(72) Inventor: ZHENG, Ruobin, Longgang District 518129 Shenzhen (CN)
(74) Representative: Kreuz, Georg Maria
(86) International application number: PCT/CN2008/072061
(87) International publication number: WO 2009/026829

(56) References cited:
- WO-A1-2007/073761
- WO-A1-2007/082552
- GB-A- 2 415 857
- SEETHARAMAN OHIO STATE UNIVERSITY A DURRESI OHIO STATE UNIVERSITY R JAGANNATHAN OHIO STATE UNIVERSITY R JAIN NAYNA NETWORKS N CHAN: "IP over Optical Networks: A Summary of Issues; draft-osu-ipo-mpls-issues-02.txt" IETF STANDARD-WORKING-DRAFT, INTERNET ENGINEERING TASK FORCE, IETF, CH, no. 2, 1 April 2001 (2001-04-01), XP015033554 ISSN: 0000-0004
- SANJAY WADHWA JUNIPER NETWORKS JEROME MOISAND JUNIPER NETWORKS SWAMI SUBRAMANIAN JUNIPER NETWORKS THOMAS HAAG T-SYSTEMS NORBERT VO: "GSMP extensions for Access Node Control Mechanism; draft-wadhwa-gsmp-l2control-configuration- 02.txt" IETF STANDARD-WORKING-DRAFT, INTERNET ENGINEERING TASK FORCE, IETF, CH, no. 2, 22 October 2006 (2006-10-22), XP015048626 ISSN: 0000-0004
- SANJAY WADHWA ET AL.: 'GSMP extensions for access node control mechanism' INTERNET DRAFTS no. 2, 22 October 2006, XP015048626
- WEI LEPING: 'Optical synchronous digital transport network' POSTS & TELECOM PRESS December 1998, pages 159 - 160

## Description

### Field of the Invention

The present invention relates to the communication field, and in particular, to a technology for failure protection of layer 2 control (L2C) connection.

### Background of the Invention

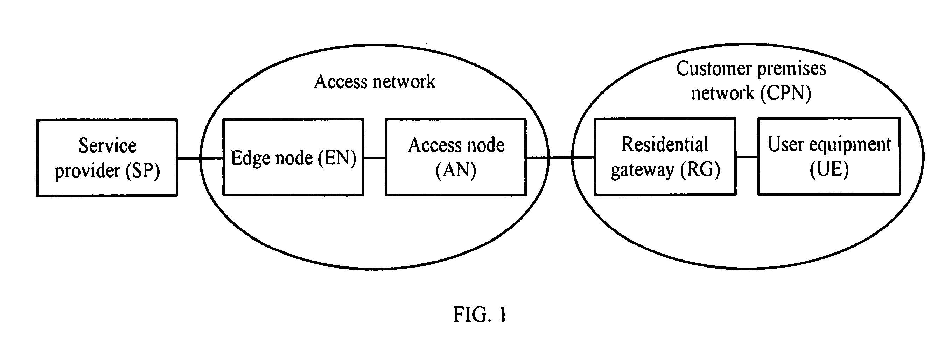

FIG. 1 shows a general reference architecture of an access network. As shown in FIG 1, the customer premises network (CPN) consists of a user equipment (UE) and a residential gateway (RG). The access network consists of an access node (AN), an edge node (EN) and an aggregation network between the AN and the EN. In a worldwide interoperability for microwave access (WiMAX) network, the EN is an access service network gateway (ASN GW), and the AN is a base station (BS). In a digital subscriber line (DSL) network, the EN is a broadband remote access server (BRAS) or a broadband network gateway (BNG), and the AN is a digital subscriber line access multiplexer (DSLAM).

With the development of communication technologies, devices in the access network (including ANs and ENs) need to be controlled so that the access network can support new services. To control each device in the access network brings about heavy burdens. To lessen the burdens, the BRAS is used to control a large number of ANs in the access network via the Layer 2 Control Protocol (L2CP) in the prior art. L2CP is used in topology discovery, line configuration, line test and multicast control.

According to L2CP, the AN and the EN are controlled by an L2C connection between the AN and the EN in the access network in the prior art, so that the AN can exchange L2C packets or Internet Protocol (IP) session packets with the EN. However, no L2C connection related protection technology is available in the prior art. Thus, how to ensure the normal transmission of packets in case of an L2C connection failure becomes a critical issue.

WO 2007/073761 A1 describes a system for providing to users of data commu-nication services access to a communication network providing these services includes an edge node (Mw) of the communication network providing these services as well as a packet network such as an Ethernet communication the users to the edge node. When the working segment W is normal, the packet is forwarded to node Mw and further to switch H through segment W. When the segment W is fault, protecting segment P is working. But before the switching is complete, the packet is still forwarded to node Mw. In this case, the communication of switch H is down for a moment.

WO 2007/082552 AI describes a system for time-based accounting of access by users to services provided by a data network including a primary access node to provide access by users by establishing via the primary access node a steady connectivity between the users and the network. Further, the document concerns accounting correctly when a backup SEN is switched, but does not disclose how to forward a data packet before the switching is complete.

The document "draft-osu-ipo-mpls-issues-02" describes transmission of IP packets over optical networks. Further, the document concerns integration and deployment of IP and optical networks in-cluding architecture, routing, signaling, management, and survivability, but does not disclose how to forward a data packet before the switching is complete.

GB 2 415 857 A describes hardware-based failover scheme enabling rapid end-to-end recovery. Further, the document provides a method can rapidly swap the affected traffic conveyed to a pre-established backup transport path, but does not disclose how to forward a data packet before the switching is complete.

The document "draft-wadhwa-gsmp-12control-configuration-02" describes proposed extensions to the GSMPv3 protocol to allow its use in a broadband environment, as a control plane between Access Nodes (e.g. DSLAM) and Broadband Network Gateways (e.g. BRAS). If the adjacency times out on either end, the DSLAM will try to re-establish the TCP connection and both sides will attempt to re-establish the adjacency. There is no backup connection in the document and it does not disclose how to forward a data packet before the TCP connection is re-established.

### Summary of the Invention

The present invention provides a method and a system for failure protection of layer 2 control (L2C) connection.

As a first aspect of the present invention the method for failure protection of L2C connection generally includes: detecting an edge node (EN) and/or EN's connection in an access network; and
if detecting a failure of an L2C connection on a first EN, switching the L2C connection on the bidirectional connection between the first EN and an access node, AN, to the bidirectional connection between a normal EN and the AN to implement "1+1" redundancy or load sharing of the first EN, or "N+1" redundancy or load sharing of the first EN.
wherein detecting the failure of the L2C connection on the first EN comprises:
the detecting the failure of the L2C connection on the first EN comprises detecting the failure of the network connection between the first EN and the AN; and
wherein before switching the L2C connection on the bidirectional connection between the first EN and the AN to the bidirectional connection between a normal EN and the AN, the method further comprises: the AN exchanges packets with the first EN through the bidirectional connection between the AN and the normal EN and bidirectional connection between the normal EN and the first EN; or
the detecting the failure of the L2C connection on the first EN comprises: detecting the failure of the network connection between the first EN and the core network or detecting that the first EN is overloaded; and
wherein before switching the L2C connection on the bidirectional connection between the first EN and the AN to the bidirectional connection between a normal EN and the AN, the method further comprises: switching the AN sends packets to the first EN through the unidirectional connection from the AN to the first EN and the unidirectional connection from the first EN to the normal EN.

As a second aspect of the present invention the system for failure protection of L2C connection generally includes: a detecting unit, adapted to monitor an EN and/or EN connection in an access network; and a switching unit, adapted to hand over an L2C connection on a first EN to a normal EN when the monitoring unit detects a failure of the first EN, so as to implement "1+1" redundancy or load sharing of the first EN or "N+1" redundancy or load sharing of the first EN.

Wherein, if the first EN is faulty due to the failure of the network connection between the first EN and the AN, the L2C connection is replaced with the bidirectional connection between the AN and the normal EN and the bidirectional connection between the normal EN and the first EN before the switching is complete; and if the first EN is faulty due to the failure of the connection between the first EN and the core network or the overload of the first EN, the L2C connection consists of a unidirectional connection from the AN to the first EN and a unidirectional connection from the first EN to the normal EN before the switching is complete.
Compared with the prior art, the present invention has the following benefits:

If a failure of the L2C connection on the first EN is detected during the detecting of the EN and/or EN connection in the access network, the L2C connection on the first EN is handed over to a normal EN. Thus, the L2C connection on the EN can be protected and L2C packets or IP session packets can be normally transmitted in case of failures.

### Brief Description of the Drawings

FIG. 1 shows a general reference architecture of an access network in the prior art;
FIG. 2 is a schematic diagram illustrating a connection failure in a method for protecting L2C connections in case of failures according to a first embodiment of the present invention;
FIG 3 is a flowchart of a method for protecting L2C connections in case of failures according to the first embodiment of the present invention;
FIG. 4 is a flowchart of a method for protecting L2C connections in case of failures according to a second embodiment of the present invention;
FIG. 5 is a schematic diagram illustrating a connection failure in a method for protecting L2C connections in case of failures according to a third embodiment of the present invention;
FIG. 6 is a flowchart of a method for protecting L2C connections in case of failures according to the third embodiment of the present invention;
FIG. 7 is a flowchart of a method for protecting L2C connections in case of failures in a fourth embodiment of the present invention;
FIG. 8 is a schematic diagram illustrating a connection failure in a method for protecting L2C connections in case of failures according to a fifth embodiment of the present invention;
FIG. 9 is a flowchart of a method for protecting L2C connections in case of failures according to the fifth embodiment of the present invention;
FIG. 10 is a schematic diagram illustrating a connection failure in a method for protecting L2C connections in case of failures according to a sixth embodiment of the present invention;
FIG. 11 is a flowchart of a method for protecting L2C connections in case of failures according to the sixth embodiment of the present invention; and
FIG. 12 shows a structure of a system for protecting L2C connections in case of failures according to a seventh embodiment of the present invention.

### Detailed Description of the Invention

To better explain the objective, technical solution and advantages of the present invention, the following describes embodiments of the present invention in detail with reference to the accompanying drawings.

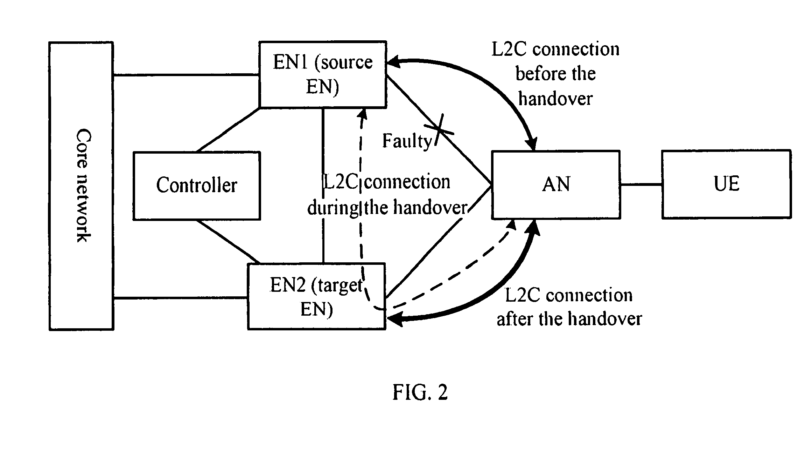

The first embodiment of the present invention provides a method for protecting L2C connections in case of failures. In this embodiment, a reference point or connection is established between all ENs in the access network. As shown in FIG. 2, a reference point or connection is established between the EN1 and the EN2, and multiple ENs are coordinated through a controller. Thus, "I+1" or "N+1" backup of ENs is implemented; that is, one EN corresponds to one standby EN or N ENs correspond to one standby EN.

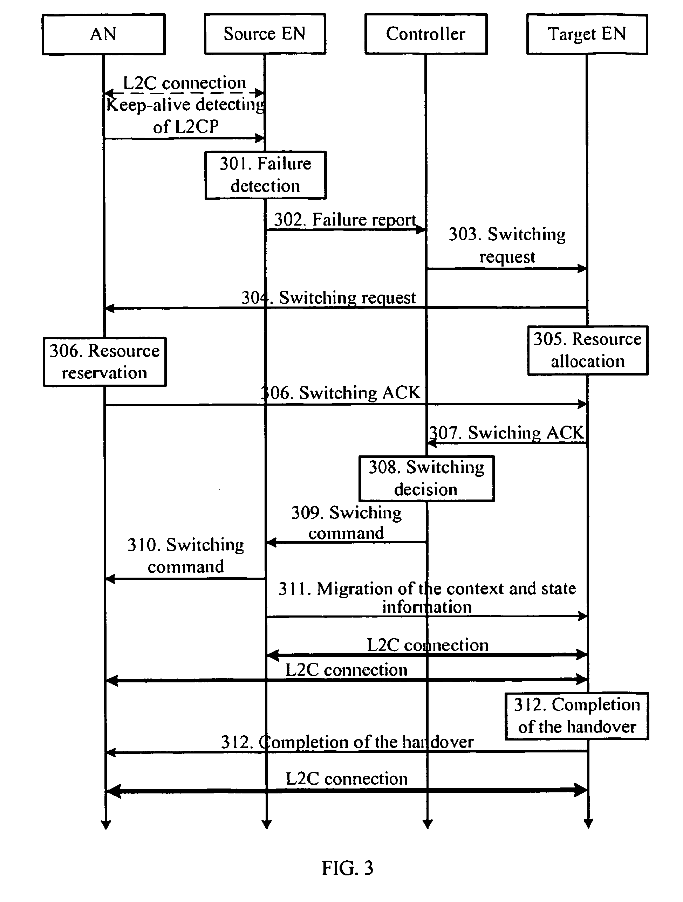

In FIG. 2, an L2C connection is established between the AN and a source EN (EN 1). The keep-alive of the L2C connection is detected through a keep-alive detecting mechanism of L2CP or other failure detecting mechanisms, as shown in FIG. 3.

Step 301: When the aggregation network between the AN and the source EN is faulty, the source EN detects a failure of the L2C connection.

Step 302: The source EN reports the failure of the L2C connection to the controller.

Step 303: The controller sends a switching request to one or multiple target ENs (for example, the EN2).

Step 304: After receiving the switching request, the target EN(s) forwards the switching request to the AN.

Step 305: The target EN(s) or the controller allocates resources needed for handing over the L2C connection of the source EN. Step 305 may be executed before step 304 or between step 304 and step 306.

Step 306: After receiving the switching request from the target EN(s), the AN reserves resources before the switching, and sends a switching ACK to the target EN(s), agreeing to hand over the L2C connection of the source EN.

Step 307: After the target EN(s) receives the switching ACK from the AN and the resources in the target EN(s) have been allocated, the target EN(s) sends a switching ACK to the controller, agreeing to hand over the L2C connection of the source EN.

Step 308: Because the controller may receive switching ACKs from multiple target ENs, the controller may make a switching decision to select a proper target EN from these target ENs. If the controller receives a switching ACK from one target EN only, step 308 may be omitted. The controller may make a switching decision by using a lot of methods, for example, first-come first-select, which means that the controller selects a target EN corresponding to the switching ACK that the controller receives first; or the controller adopts an optimal selection method, which means that the controller selects a target EN where the allocated resources are best (for example, a target EN with the most sufficient allocated resources) according to the received switching ACK.

Step 309: The controller sends a switching command for handing over the connection to a target EN to the source EN, where the switching command includes an ID of the target EN. Then, the L2C connection switching process is started; that is, the L2C connection is changed.

Step 310: The source EN sends a switching command to the AN.

Step 311: The context and state information of the L2C connection and/or the IP session connection are migrated by the source EN to the target EN through a reference point or connection between the source EN and the target EN. The target EN is the standby EN of the source EN. In this embodiment, different source ENs may be backed up through different ENs; that is, the "1+1" backup is implemented. Different source ENs may also be backed up through a same EN; that is, the "N+1" backup is implemented.

After the L2C connection switching process is started and before the switching is complete, the L2C connection between the AN and the source EN is replaced with the bidirectional connection between the AN and the target EN and the bidirectional connection between the target EN and the source EN, as represented by dotted arrows in FIG 2. Specifically, before the switching is complete, the AN sends an L2C packet or an IP session packet (of which the destination address is the source EN) to the target EN; the L2C packet or IP session packet is not terminated at the target EN, but transmitted via the target EN to the source EN for subsequent transmission or processing. In addition, the source EN sends the L2C packet or the IP session packet (of which the destination address is the AN) to the destination AN; the L2C packet or IP session packet is transmitted via the target EN to the AN.

Step 312: The migration of the context and state information of the L2C connection and/or the IP session is complete; that is, the switching is complete. The target EN sends an instruction indicating the completion of switching to the AN, notifying the AN that the L2C connection is already handed over to the bidirectional connection between the AN and the target EN, so that the L2C packet or IP session packet can be directly exchanged between the AN and the target EN.

When a failure of the L2C connection on the first EN is detected during the detecting of the EN and EN connection in the access network, the L2C connection on the first EN is handed over to a normal EN. Thus, the L2C connection on the EN can be protected and L2C packets or IP session packets can be transmitted in case of failures.

The second embodiment of the present invention also provides a method for protecting L2C connections in case of failures. The second embodiment is same as the first embodiment except for the following difference: In the first embodiment, the controller participates in the switching of the L2C connection of the source EN; that is, if the source EN detects a failure of the L2C connection, the source EN reports the failure to the controller, and the controller sends a switching request to one or multiple target ENs; in the second embodiment, no independent controller is set to coordinate the L2C connection switching process, but the EN controls the L2C connection switching process.

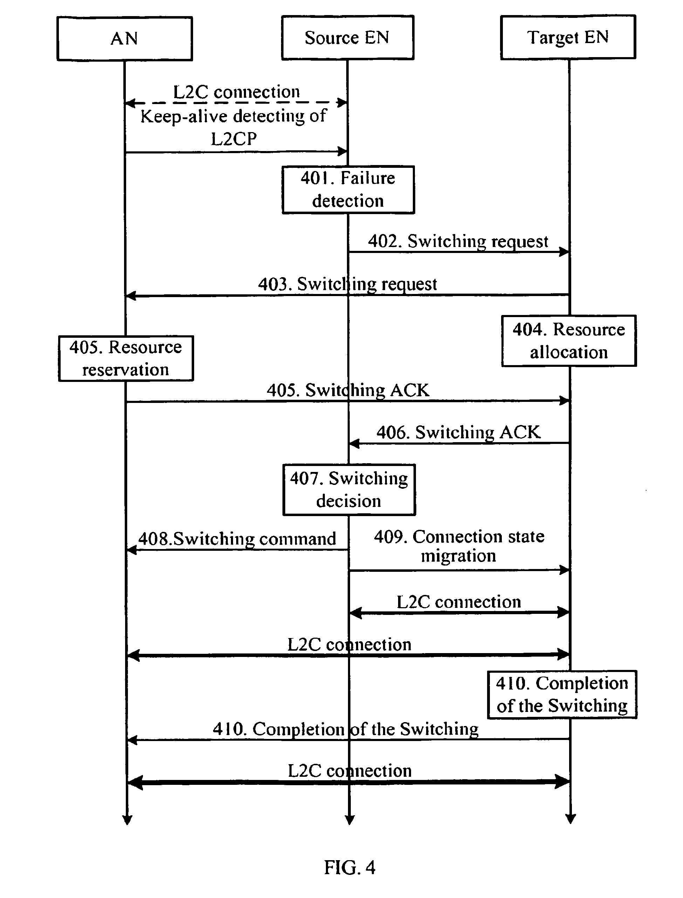

As shown in FIG. 4, step 401 is the same as step 301, and is not further described.

Step 402: The source EN sends a switching request to the target EN.

Step 403: After receiving the switching request, the target EN forwards the switching request to the AN.

Step 404: The target EN allocates resources needed for handing over the L2C connection of the source EN. Step 404 may be executed before step 403 or between step 403 and step 405.

Step 405: After receiving the switching request from the target EN, the AN reserves resources before the switching, and sends a switching ACK to the target EN, agreeing to hand over the L2C connection of the source EN.

Step 406: After the target EN receives a switching ACK from the AN and the resources in the target EN have been allocated, the target EN sends a switching ACK to the controller, agreeing to hand over the L2C connection of the source EN.

Step 407: Because the source EN may receive switching ACKs from multiple target ENs, the source EN may make a switching decision to select a proper target EN. The source EN may send a switching command to the selected target EN, indicating the target EN is selected.

Step 408: The source EN sends a switching command to the AN, where the switching command includes an ID of the target EN. Then, the L2C connection switching process is started; that is, the L2C connection is changed.

Step 409 and step 410 are the same as step 311 and step 312, and are not further described.

The third embodiment of the present invention provides a method for protecting L2C connections in case of failures. In this method, a reference point or connection is established between all ENs in the access network; multiple ENs are coordinated through a controller so as to implement "1+1" or "N+1" backup or load sharing of the EN.

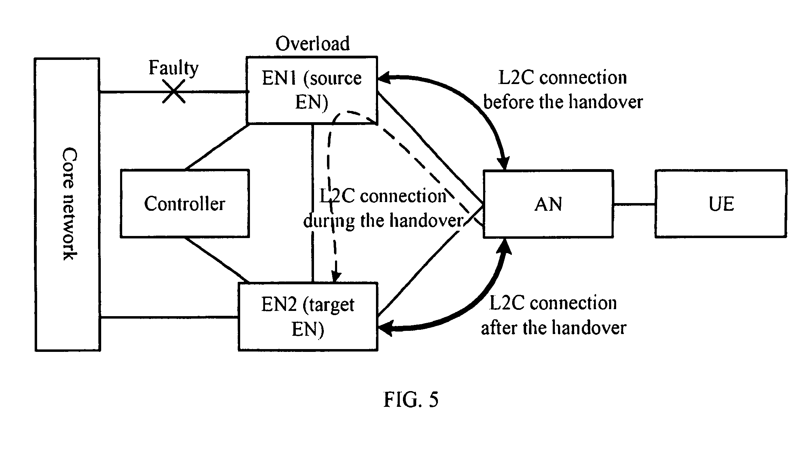

This embodiment is the same as the first embodiment except for the following difference: The first embodiment provides a method for protecting L2C connections in case of failures when the aggregation network between the source EN and the AN is faulty; the third embodiment provides a method for protecting L2C connections in case of failures when the source EN is overloaded or the aggregation network after the source EN is faulty, for example, when the aggregation network between the source EN and the core network is faulty, as shown in FIG. 5.

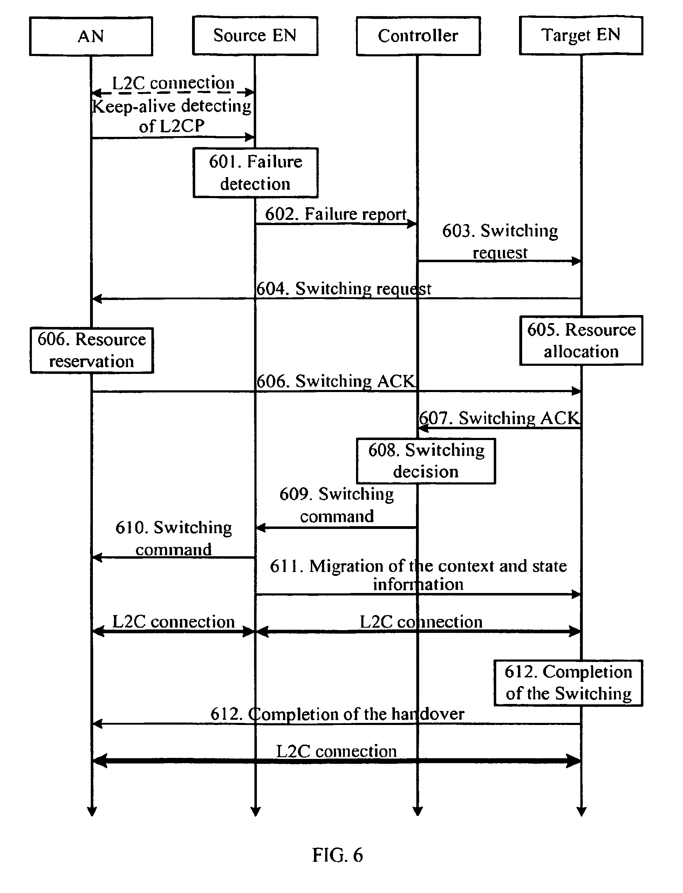

In this embodiment, the keep-alive of the L2C connection is also detected by using the keep-alive detecting mechanism of L2CP or other failure detecting mechanisms, as shown in FIG. 6.

Step 601: When the source EN is overloaded or the aggregation network after the source EN is faulty, the source EN detects the failure of the L2C connection.

Step 602 and step 610 are the same as step 302 and step 310, and are not further described.

Step 611: The context and state information of the L2C connection and/or the IP session are migrated by the source EN to the target EN through the reference point or connection between the source EN and the target EN.

After the L2C connection switching process is started and before the switching is complete, the L2C connection between the AN and the source EN is replaced with the unidirectional connection from the AN to the source EN and the unidirectional connection from the source EN to the target EN, as represented by dotted arrows in FIG. 5. Specifically, before the switching is complete, that is, before step 612, the AN sends an L2C packet or IP session packet (of which the destination address is the source EN) to the source EN; the L2C packet or IP session packet is not terminated at the source EN, but transmitted via the source EN to the target EN for subsequent transmission or processing.

Step 612: The migration of the context and state information of the L2C connection and/or the IP session is complete; that is, the switching is complete. The target EN sends an instruction indicating the completion of the switching to the AN, notifying the AN that the L2C connection is already handed over to the bidirectional connection between the AN and the target EN, so that the L2C packet or IP session packet can be directly exchanged between the AN and the target EN.
The fourth embodiment of the present invention also provides a method for protecting L2C connections in case of failures. In this method, a reference point or connection is established between all ENs in the access network, and multiple ENs are coordinated through the controller, so as to implement "I+1" or "N+1" backup or load sharing of the EN.

This embodiment is similar to the second embodiment except the following difference: The second embodiment provides a method for protecting L2C connections in case of failures when the aggregation network between the source EN and the AN is faulty; this embodiment provides a method for protecting L2C connections in case of failures when the source EN is overloaded or when the aggregation network after the source EN is faulty, for example, when the aggregation network between the source EN and the core network is faulty.

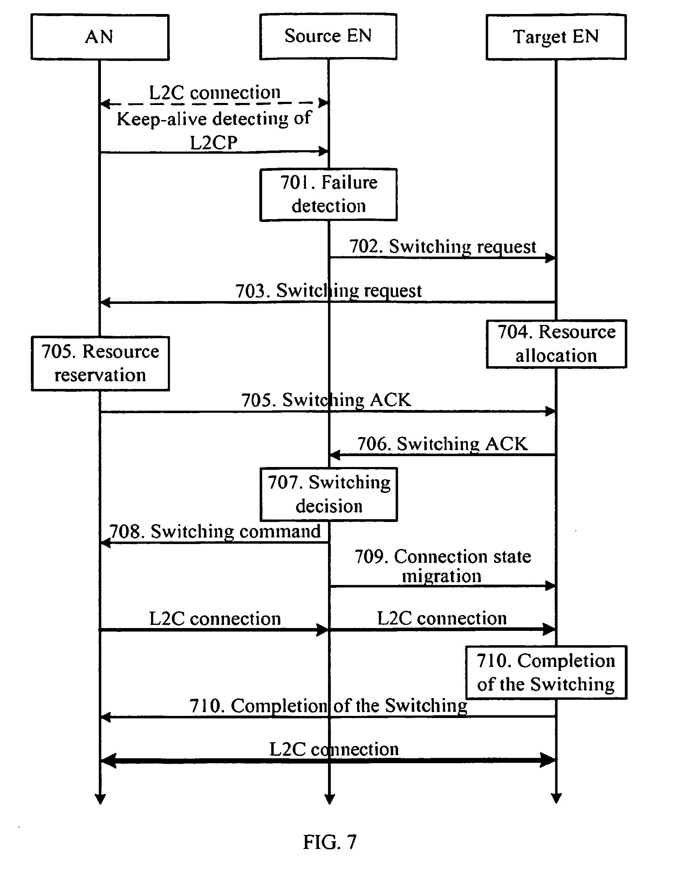

In this embodiment, the keep-alive of the L2C connection is also detected by using the keep-alive detecting mechanism of L2CP or other failure detecting mechanisms, as shown in FIG. 7.

Step 701: When the source EN is overloaded or the aggregation network after the source EN is faulty, the source EN detects the failure of the L2C connection.

Step 702 and step 708 are the same as step 402 and step 408, and are not further described.

Step 709: The context and state information of the L2C connection and/or the IP session are migrated by the source EN to the target EN through the reference point or connection between the source EN and the target EN.

After the L2C connection switching process is started and before the switching is complete, the L2C connection between the AN and the source EN is replaced with the unidirectional connection from the AN to the source EN and the unidirectional connection from the source EN to the target EN, as represented by dotted arrows in FIG. 5. Specifically, before the switching is compete, the AN sends an L2C packet or IP session packet (of which the destination address is the source EN) to the source EN; the L2C packet or IP session packet is not terminated at the source EN, but transmitted via the source EN to the target EN for subsequent transmission or processing.

Step 710: The migration of the context and state information of the L2C connection and/or the IP session is complete; that is, the switching is complete. The target EN sends an instruction indicating the completion of the switching to the AN, notifying the AN that the L2C connection is already handed over to the bidirectional connection between the AN and the target EN, so that the L2C packet or IP session packet can be directly exchanged between the AN and the target EN.

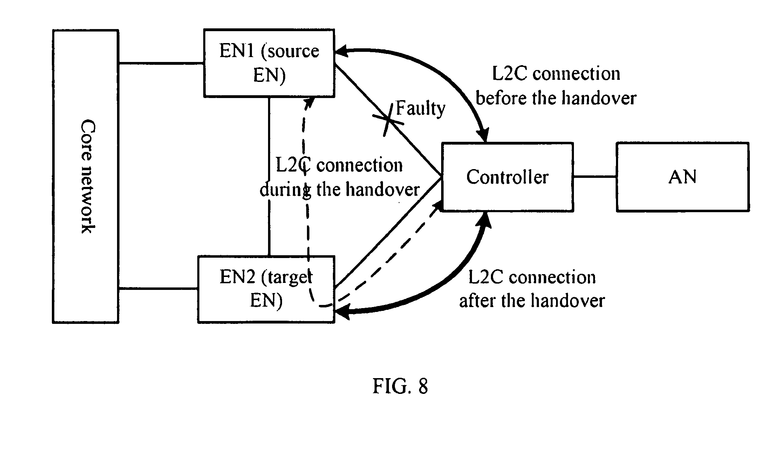

The fifth embodiment also provides a method for protecting L2C connections in case of failures. Similarly to the first embodiment, in this embodiment, a reference point or connection is established between all ENs in the access network and multiple ENs are coordinated through the controller, so as to implement the "1+1" or "N+1" backup of the IP EN. The difference is that the controller in this embodiment is located in an aggregation switch (AGS), as shown in FIG. 8.

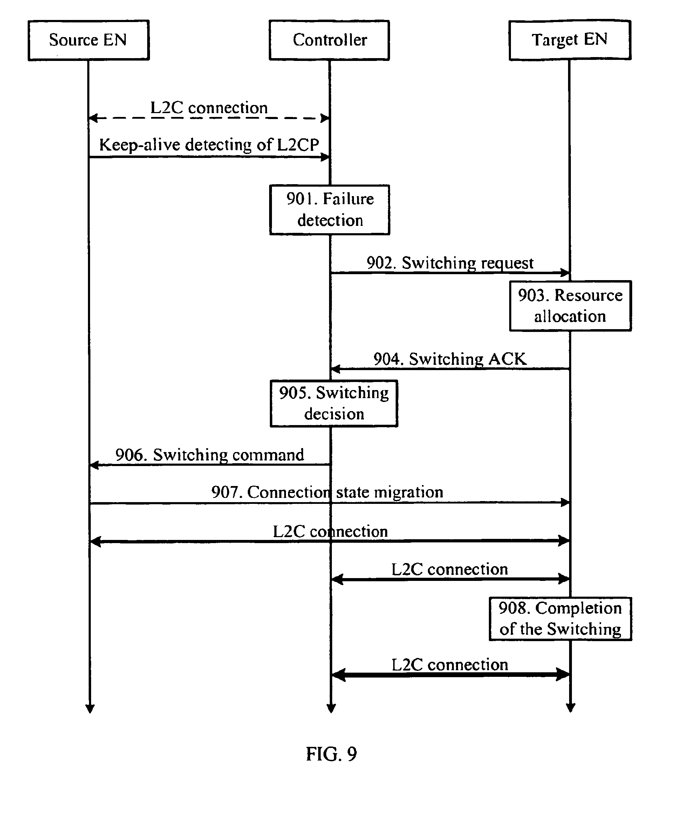

FIG. 9 illustrates a backup and switching process of an EN when the aggregation network between the controller and the EN is faulty.
In this embodiment, the L2C connection of the source EN is carried on the bidirectional connection between the AN and the controller and the bidirectional connection between the controller and the source EN; the keep-alive of the L2CP connection is detected by using the keep-alive mechanism of L2CP or other failure detecting mechanisms.

Step 901: The controller detects a failure of the L2C connection when the aggregation network between the controller and the source EN is faulty.

Step 902: The controller sends a switching request to one or multiple target ENs.

Step 903: The target EN(s) or the controller allocates resources needed for handing over the L2C connection of the source EN.

Step 904: After the resources in the target EN(s) are allocated, the target EN(s) sends a switching ACK to the controller, agreeing to hand over the L2C connection of the source EN.

Step 905: Because the controller may receive switching ACKs from multiple target ENs, the controller makes a switching decision to select a proper target EN.

Step 906: The controller sends a switching command for handing over the connection to the selected target EN, where the switching command includes an ID of the target EN. Then, the switching process is started.

Step 907: The context and state information of the L2C connection and/or the IP session are migrated by the source EN to the target EN through the reference point or connection between the source EN and the target EN.

After the L2C connection switching process is started and before the switching is complete, the L2C connection between the controller and the source EN is replaced with the bidirectional connection between the controller and the target EN and the bidirectional connection between the target EN and the source EN, as represented by the dotted arrows in FIG. 8. Specifically, before the switching is complete, the controller sends an L2C packet or IP session packet (of which the destination address is the source EN) to the target EN; the L2C packet or IP session packet is not terminated at the target EN, but transmitted via the target EN to the source EN for subsequent transmission or processing. In addition, the source EN sends the L2C packet or IP session packet (of which the destination address is the AN) to the target EN; the L2C packet or IP session packet is transmitted via the target EN to the controller and further transmitted to the AN.

Step 908: The migration of the context and state information of the L2C connection (including the IP session) and/or the IP session is complete; that is, the switching is complete. The L2C connection of the source EN is handed over to the bidirectional connection between the target EN and the controller and the bidirectional connection between the controller and the AN, so that the L2C packet or IP session packet can be directly exchanged between the target EN and the controller.

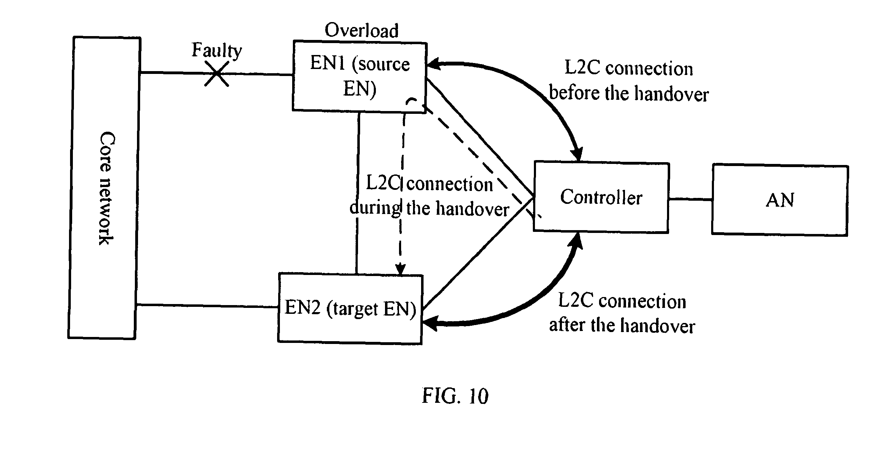

The sixth embodiment of the present invention also provides a method for protecting L2C connections in case of failures. This embodiment is the same as the fifth embodiment except for the following difference: The fifth embodiment provides a method for protecting L2C connections in case of failures when the aggregation network between the source EN and the controller is faulty; this embodiment provides a method for protecting L2C connections in case of failures when the source EN is overloaded or when the aggregation network after the source EN is faulty, for example, when the aggregation network between the source EN and the core network is faulty, as shown in FIG. 10.

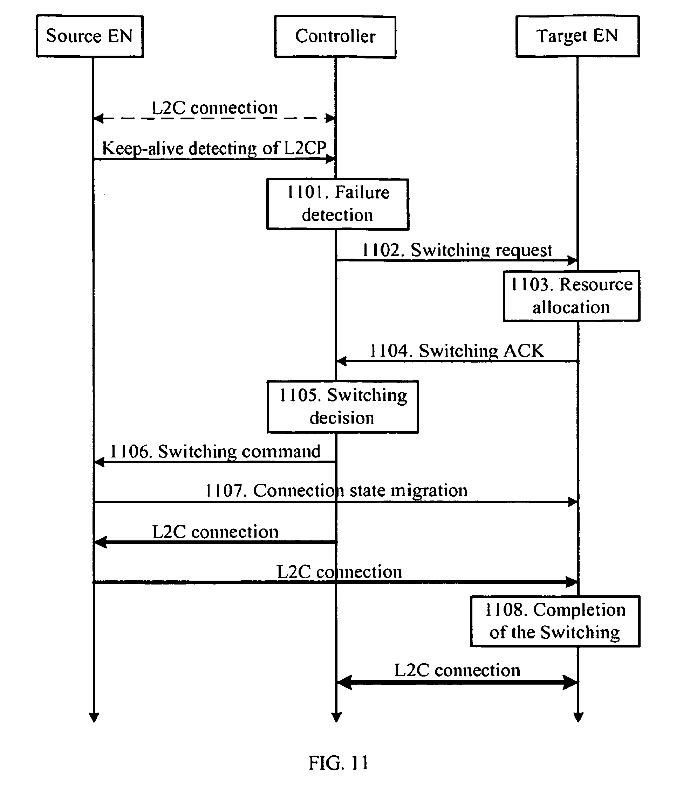

In this embodiment, the keep-alive of the L2C connection is also detected by using the keep-alive detecting mechanism of L2CP or other failure detecting mechanisms, as shown in FIG. 11.

Step 1101: When the source EN is overloaded or the aggregation network after the source EN is faulty, the source EN detects the failure of the L2C connection.

Step 1102 and step 1106 are the same as step 902 and step 906, and are not further described.

Step 1107: The context and state information of the L2C connection and/or the IP session are migrated by the source EN to the target EN through the reference point or connection between the source EN and the target EN.

After the L2C connection switching process is started and before the switching is complete, the L2C connection between the controller and the source EN is replaced with the unidirectional connection from the controller to the source EN and the unidirectional connection from the source EN to the target EN, as represented by dotted arrows in FIG. 10. Specifically, before the switching is complete, the controller sends an L2C packet or IP session packet (of which the destination address is the source EN) to the source EN; the L2C packet or IP session packet is not terminated at the source EN, but transmitted via the source EN to the target EN for subsequent transmission or processing.

Step 1108: The migration of the context and state information of the L2C connection (including the IP session) and/or the IP session is complete; that is, the switching is complete. The L2C connection of the source EN is handed over to the bidirectional connection between the controller and the target EN and the bidirectional connection between the AN and the controller, so that the L2C packet or IP session packet can be directly exchanged between the controller and the target EN.

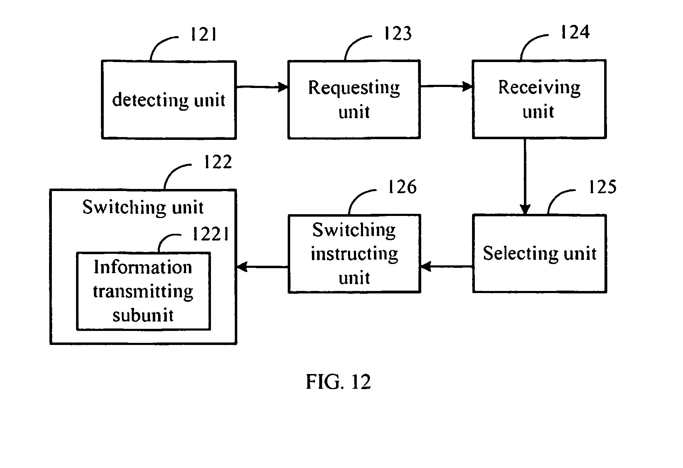

The seventh embodiment of the present invention provides a system for protecting L2C connections in case of failures. As shown in FIG. 12, the system includes: a detecting unit 121, adapted to detect the EN and EN connection in the access network; and a switching unit 122, adapted to hand over the L2C connection on the first EN to a normal EN when the detecting unit 121 detects a failure of the L2C connection on the first EN. Thus, the L2C connection of the EN can be protected and L2C packets or IP session packets can be normally transmitted in case of failures.

A reference point or connection is established between the first EN and the normal EN. The switching unit includes an information transmitting subunit 1221, which is adapted to send the context and state information of the L2C connection on the first EN to the normal EN through the reference point or connection between the first EN and the normal EN.

The system may further include: a requesting unit 123, adapted to send an L2C connection switching request to at least one normal EN; a receiving unit 124, adapted to receive an ACK that means agreeing to the switching from at least one normal EN; a selecting unit 125, adapted to select one of these normal ENs when the receiving unit receives ACKs agreeing to the switching from at least two normal ENs; and a switching instructing unit 126, adapted to instruct the switching unit 122 to hand over the L2C connection of the first EN to the normal EN selected by the selecting unit 125.

It should be noted that the units in this embodiment are logical units and each logical unit may be a functional module in different physical devices in the network or consist of functional modules in different physical devices in the network.
For example, the preceding detecting unit, switching unit, requesting unit, receiving unit, selecting unit and switching instructing unit may be set in the EN, and the EN controls the switching of the L2C connection; or an independent controller may be set in the system, and all the preceding units are set in the controller; the controller uniformly controls the switching of the L2C connection of each EN. Through the coordination of the controller, the L2C connection of the first EN is handed over to a normal EN, so that the most proper EN may be selected for switching and the best effect of the "1+1" or "N+1" backup or load sharing can be achieved. Alternatively, some of the preceding units are set in the EN, and some are set in the controller or in other NEs in the access network.

In this embodiment, if the failure of the source EN is detected by detecting the EN and EN connection in the access network, the L2C connection on the source EN is handed over to a normal EN. Thus, the L2C connection of the EN can be protected and L2C packets or IP session packets can be transmitted in case of failures.

For the L2C connection between the source EN and the AN, if the source EN is faulty due to the failure of the network connection between the source EN and the AN, the L2C connection is replaced with the bidirectional connection between the AN and the normal EN and the bidirectional connection between the normal EN and the source EN before the switching is complete. If the source EN is faulty due to the failure of the connection between the source EN and the core network or the overload of the source EN, the L2C connection consists of a unidirectional connection from the AN to the source EN and a unidirectional connection from the source EN to the normal EN before the switching is complete. Thus, during the L2C connection switching process, the L2C packets or IP session packets can also be normally transmitted.

For the L2C connections between the source EN and the controller and between the controller and the AN, if the source EN is faulty due to the failure of the connection between the source EN and the controller, the L2C connection is replaced with the bidirectional connection between the controller and the normal EN and the bidirectional connection between the normal EN and the source EN before the switching is complete. If the source EN is faulty due to the failure of the connection between the source EN and the core network or the overload of the source EN, the L2C connection is replaced with the unidirectional connection from the controller to the source EN and the unidirectional connection from the source EN to the normal EN. Thus, during the L2C connection switching process, the L2C packets or IP session packets can also be normally transmitted.

Through the coordination of the controller, the L2C connection of the source EN is handed over to a normal EN, so that the most proper EN may be selected for switching and the best effect of the "1+1" or "N+1" backup or load sharing can be achieved.

The source EN may also hand over the L2C connection to a normal EN selected by the source EN. With better independence, this method reduces the burden of the controller.

Although the present invention has been described through several exemplary embodiments and accompanying drawings, the invention is not limited to such embodiments.

## Claims

1. A method for failure protection of layer 2 control, L2C, wherein:
detecting an edge node, EN, and/or EN's connection in an access network; and
if detecting a failure of an L2C connection on a first EN, switching the L2C connection on the first EN to a normal EN to implement "1+1" redundancy or load sharing of the first EN, or "N+1" redundancy or load sharing of the first EN, wherein switching the L2C connection on the first EN to a normal EN comprises switching the L2C connection on the bidirectional connection between the first EN and an access node, AN, to the bidirectional connection between a normal EN and the AN;
**characterized in that**,
detecting the failure of the L2C connection on the first EN comprises:
detecting the failure of the network connection between the first EN and the AN and
wherein before switching the L2C connection on the bidirectional connection between the first EN and the AN to the bidirectional connection between a normal EN and the AN, the method further comprises: the AN exchanges packets with the first EN through the bidirectional connection between the AN and the normal EN and bidirectional connection between the normal EN and the first EN; or
detecting the failure of the network connection between the first EN and the core network or detecting that the first EN is overloaded and
wherein before switching the L2C connection on the bidirectional connection between the first EN and the AN to the bidirectional connection between a normal EN and the AN, the method further comprises: the AN sends packets to normal EN through the unidirectional connection from the AN to the first EN and the unidirectional connection from the first EN to the normal EN.

2. The method of claim 1, wherein the EN in the access network is a broadband access server or a broadband network gateway, BNG.

3. The method of claim 1, wherein the detecting the EN and/or EN connection in the access network comprises:
detecting the EN and/or EN's connection in the access network by using a keep-alive mechanism of a Layer 2 Control Protocol, L2CP.

4. The method of claim 1, wherein the switching the L2C connection on the first EN to the normal EN comprises:
sending state information in the first EN to the normal EN through a reference point or connection between the first EN and the normal EN.

5. The method of claim 1, wherein before the step of switching the L2C connection on the first EN to a normal EN, the method further comprises:
sending, by a controller connected to the first EN, an L2C connection switching request to the normal, EN when detecting the failure of the L2C connection on the first EN;
if the normal EN receives an instruction agreeing to the switching from the AN and allocates resources needed for switching the L2C connection, sending, by the normal EN, an instruction for switching to the normal EN to the first EN, or
sending, by the normal EN, an ACK agreeing to the switching to the controller; and
sending, by the controller, an instruction for switching to the normal EN to the first EN after receiving the ACK that means agreeing to the switching.

6. The method of any of claims 1 to 4, wherein
the detecting the failure of the L2C connection on the first EN comprises:
detecting a failure of a network connection between the first EN and a controller; or
detecting a failure of a network connection between the first EN and a core network;
or detecting that the first EN is overloaded; and
wherein switching the L2C connection on the first EN to the normal EN comprises:
switching the L2C connection on the bidirectional connection between the first EN and the controller to the bidirectional connection between the normal EN and the controller.

7. The method of claim 6, wherein detecting the failure of the L2C connection on the first EN comprises:
detecting the failure of the network connection between the first EN and the controller; and
before the step of switching the L2C connection on the first EN to a normal EN, the method further comprises:
the controller exchanges packets with the first EN through the bidirectional connection between the controller and the normal EN and bidirectional connection between the normal EN and the first EN; or
wherein the detecting the failure of the L2C connection on the first EN comprises:
detecting the failure of the network connection between the first EN and the core network or detecting that the first EN is overloaded; and
the step of switching the L2C connection on the first EN to a normal EN, the method further comprises:
the controller sends packets to the first EN through the unidirectional connection from the controller to the first EN and the unidirectional connection from the first EN to the normal EN.

8. The method of claim 6, wherein before the step of switching the L2C connection on the first EN to a normal EN, the method further comprises:
sending, by the controller, an L2C connection switching request to the normal EN after detecting a failure of the first EN;
sending, by the normal EN, an ACK that means agreeing to the switching to the controller, if the normal EN allocates resources needed for switching the L2C connection; and
sending, by the controller, an instruction for switching to the normal EN to the first EN after receiving the ACK that means agreeing to the switching.

9. The method of any of claim 5 or 8, wherein the sending the switching request comprises: sending, by the controller or the first EN, the switching request to at least two normal ENs; and
if receiving the ACK agreeing to the switching from at least two normal ENs, by the controller or the first EN, selecting one of these normal ENs, and switching the L2C connection to the selected normal EN.

10. A system for failure protection of layer 2 control, L2C, connection, comprising:
a detecting unit (121), adapted to detect an edge node, EN, and/or EN's connection in an access network; and
a switching unit (122), adapted to switch an L2C connection on a first EN to a normal EN if a failure of the L2C connection on the first EN is detected, so as to implement "1+1" redundancy or load sharing of the first EN or "N+1" redundancy or
load sharing of the first EN;
**characterized in that**,
if the first EN is faulty due to the failure of the network connection between the first EN and the AN, the L2C connection is replaced with the bidirectional connection between the AN and the normal EN and the bidirectional connection between the normal EN and the first EN before the switching is complete; and
if the first EN is faulty due to the failure of the connection between the first EN and the core network or the overload of the first EN, the L2C connection consists of a unidirectional connection from the AN to the first EN and a unidirectional connection from the first EN to the normal EN before the switching is complete.

11. The system of claim 10, wherein a reference point or connection is established between the first EN and the normal EN; and the switching unit comprises:
an information transmitting subunit, adapted to send state information in the first EN to the normal EN through the reference point or connection between the first EN and the normal EN.

12. The system of claim 10, further comprising:
a requesting unit (123), adapted to send an L2C connection switching request to at least one normal EN;
a receiving unit (124), adapted to receive an ACK agreeing to the switching from at least one normal EN; and
a switching instructing unit (126), adapted to instruct the switching unit to hand over the L2C connection to the normal EN that sends the ACK received by the receiving unit.

13. The system of claim 12, further comprising:
a selecting unit (125), adapted to select one of these normal ENs when the receiving unit receives the ACK that means agreeing to the switching from at least two normal ENs; and
the switching instructing unit, adapted to instruct the switching unit to hand over the L2C connection to the normal EN selected by the selecting unit.

## Patentansprüche

1. Verfahren zum Ausfallschutz der Layer 2 Control L2C, umfassend:
Detektieren eines Randknotens EN und/oder der Verbindung von EN in einem Zugangsnetzwerk; und,
wenn ein Ausfall einer L2C-Verbindung auf einem ersten EN detektiert wird, Umschalten der L2C-Verbindung auf dem ersten EN auf einen normalen EN, um "1+1"-Redundanz oder Lastteilung des ersten EN oder "N+1"-Redundanz oder Lastteilung des ersten EN zu implementieren, wobei das Umschalten der L2C-Verbindung auf dem ersten EN auf einen normalen EN das Umschalten der L2C-Verbindung auf der bidirektionalen Verbindung zwischen dem ersten EN und einem Zugangsknoten AN auf die bidirektionale Verbindung zwischen einem normalen EN und dem AN umfasst;
**dadurch gekennzeichnet, dass**
das Detektieren des Ausfalls der L2C-Verbindung auf dem ersten EN Folgendes umfasst:
Detektieren des Ausfalls der Netzwerkverbindung zwischen dem ersten EN und dem AN, und
wobei das Verfahren vor dem Umschalten der L2C-Verbindung auf der bidirektionalen Verbindung zwischen dem ersten EN und dem AN auf die bidirektionale Verbindung zwischen einem normalen EN und dem AN ferner Folgendes umfasst: der AN tauscht Pakete durch die bidirektionale Verbindung zwischen dem AN und dem normalen EN und die bidirektionale Verbindung zwischen dem normalen EN und dem ersten EN mit dem ersten EN aus; oder
Detektieren des Ausfalls der Netzwerkverbindung zwischen dem ersten EN und dem Kernnetzwerk oder Detektieren, dass der erste EN überlastet ist, und
wobei das Verfahren vor dem Umschalten der L2C-Verbindung auf der bidirektionalen Verbindung zwischen dem ersten EN und dem AN auf die bidirektionale Verbindung zwischen einem normalen EN und dem AN ferner Folgendes umfasst: der AN sendet Pakete durch die unidirektionale Verbindung von dem AN zu dem ersten EN und die unidirektionale Verbindung von dem ersten EN zu dem normalen EN zu dem normalen EN.

2. Verfahren nach Anspruch 1, wobei der EN in dem Zugangsnetzwerk ein Breitband-Zugangsserver oder ein Breitband-Netzwerk-Gateway BNG ist.

3. Verfahren nach Anspruch 1, wobei das Detektieren des EN und/oder der EN-Verbindung in dem Zugangsnetzwerk Folgendes umfasst:
Detektieren des EN und/oder der Verbindung des EN in dem Zugangsnetzwerk durch Verwendung eines Keep-Alive-Mechanismus eines Layer 2 Control Protocol L2CP.

4. Verfahren nach Anspruch 1, wobei das Umschalten der L2C-Verbindung auf dem ersten EN auf den normalen EN Folgendes umfasst:
Senden von Zustandsinformationen in dem ersten EN zu dem normalen EN durch einen Referenzpunkt oder eine Verbindung zwischen dem ersten EN und dem normalen EN.

5. Verfahren nach Anspruch 1, wobei das Verfahren vor dem Schritt des Umschaltens der L2C-Verbindung auf dem ersten EN auf einen normalen EN ferner Folgendes umfasst:
Senden einer L2C-Verbindungsumschaltanforderung durch eine mit dem ersten EN verbundene Steuerung zu dem normalen EN, wenn der Ausfall der L2C-Verbindung auf dem ersten EN detektiert wird;
wenn der normale EN eine dem Umschalten zustimmende Anweisung von dem AN erhält und zum Umschalten der L2C-Verbindung benötigte Betriebsmittel vergibt, Senden einer Anweisung zum Umschalten auf den normalen EN durch den normalen EN zu dem ersten EN oder
Senden eines dem Umschalten zustimmenden ACK durch den normalen EN zu der Steuerung; und
Senden einer Anweisung zum Umschalten auf den normalen EN durch die Steuerung zu dem ersten EN nach dem Empfang des ACK, das bedeutet, dass dem Umschalten zugestimmt wird.

6. Verfahren nach einem der Ansprüche 1 bis 4, wobei
das Detektieren des Ausfalls der L2C-Verbindung auf dem ersten EN Folgendes umfasst:
Detektieren eines Ausfalls einer Netzwerkverbindung zwischen dem ersten EN und einer Steuerung; oder
Detektieren eines Ausfalls einer Netzwerkverbindung zwischen dem ersten EN und einem Kernnetzwerk;
oder Detektieren, dass der erste EN überlastet ist; und
wobei das Umschalten der L2C-Verbindung auf dem ersten EN auf den normalen EN Folgendes umfasst:
Umschalten der L2C-Verbindung auf der bidirektionalen Verbindung zwischen dem ersten EN und der Steuerung auf die bidirektionale Verbindung zwischen dem normalen EN und der Steuerung.

7. Verfahren nach Anspruch 6, wobei das Detektieren des Ausfalls der L2C-Verbindung auf dem ersten EN Folgendes umfasst:
Detektieren des Ausfalls der Netzwerkverbindung zwischen dem ersten EN und der Steuerung; und
das Verfahren vor dem Schritt des Umschaltens der L2C-Verbindung auf dem ersten EN auf einen normalen EN ferner Folgendes umfasst:
die Steuerung tauscht Pakete durch die bidirektionale Verbindung zwischen der Steuerung und dem normalen EN und die bidirektionale Verbindung zwischen dem normalen EN und dem ersten EN mit dem ersten EN aus; oder
wobei das Detektieren des Ausfalls der L2C-Verbindung auf dem ersten EN Folgendes umfasst:
Detektieren des Ausfalls der Netzwerkverbindung zwischen dem ersten EN und dem Kernnetzwerk oder Detektieren, dass der erste EN überlastet ist; und
das Verfahren dem Schritt des Umschaltens der L2C-Verbindung auf dem ersten EN auf einen normalen EN ferner Folgendes umfasst:
die Steuerung sendet Pakete durch die unidirektionale Verbindung von der Steuerung zu dem ersten EN und die unidirektionale Verbindung von dem ersten EN zu dem normalen EN zu dem ersten EN.

8. Verfahren nach Anspruch 6, wobei das Verfahren vor dem Schritt des Umschaltens der L2C-Verbindung auf dem ersten EN auf einen normalen EN ferner Folgendes umfasst:
Senden einer L2C-Verbindungsumschaltanforderung durch die Steuerung zu dem normalen EN, nachdem ein Ausfall des ersten EN detektiert wird;
Senden eines ACK, das Zustimmung zu dem Umschalten bedeutet, durch den normalen EN zu der Steuerung, wenn der normale EN zum Umschalten der L2C-Verbindung benötigte Betriebsmittel vergibt; und
Senden einer Anweisung zum Umschalten auf den normalen EN durch die Steuerung zu dem ersten EN nach dem Empfang des ACK, das Zustimmung zu dem Umschalten bedeutet.

9. Verfahren nach einem der Ansprüche 5 oder 8, wobei das Senden der Umschaltanforderung Folgendes umfasst: Senden der Umschaltanforderung durch die Steuerung oder den ersten EN zu mindestens zwei normalen EN; und
wenn das ACK, das dem Umschalten zustimmt, von mindestens zwei normalen EN empfangen wird, Auswählen eines dieser normalen EN durch die Steuerung oder den ersten EN und Umschalten der L2C-Verbindung auf den ausgewählten normalen EN.

10. System zum Ausfallschutz einer Verbindung der Layer 2 Control L2C, umfassend:
eine Detektionseinheit (121), die dafür ausgelegt ist, einen Randknoten EN und/oder eine Verbindung des EN in einem Zugangsnetzwerk zu detektieren; und
eine Umschalteinheit (122), die dafür ausgelegt ist, eine L2C-Verbindung auf einem ersten EN auf einen normalen EN umzuschalten, wenn ein Ausfall der L2C-Verbindung auf dem ersten EN detektiert wird, um so "1+1"-Redundanz oder Lastteilung des ersten EN oder "N+1 "-Redundanz oder Lastteilung des ersten EN zu implementieren;
**dadurch gekennzeichnet, dass**,
wenn der erste EN auf Grund des Ausfalls der Netzwerkverbindung zwischen dem ersten EN und dem AN fehlerhaft ist, die L2C-Verbindung mit der bidirektionalen Verbindung zwischen dem AN und dem normalen EN und der bidirektionalen Verbindung zwischen dem normalen EN und dem ersten EN ersetzt wird, bevor das Umschalten abgeschlossen ist; und
wenn der erste EN auf Grund des Ausfalls der Verbindung zwischen dem ersten EN und dem Kernnetzwerk oder der Überlastung des ersten EN fehlerhaft ist, die L2C-Verbindung aus einer unidirektionalen Verbindung von dem AN zu dem ersten EN und einer unidirektionalen Verbindung von dem ersten EN zu dem normalen EN besteht, bevor das Umschalten abgeschlossen ist.

11. System nach Anspruch 10, wobei ein Referenzpunkt oder eine Verbindung zwischen dem ersten EN und dem normalen EN hergestellt wird; und die Umschalteinheit Folgendes umfasst:
eine Informationsübertragungs-Subeinheit, die dafür ausgelegt ist, Zustandsinformationen in dem ersten EN durch den Referenzpunkt oder die Verbindung zwischen dem ersten EN und dem normalen EN zu dem normalen EN zu senden.

12. System nach Anspruch 10, ferner umfassend:
eine Anforderungseinheit (123), die dafür ausgelegt ist, eine L2C-Verbindungsumschaltanforderung zu mindestens einem normalen EN zu senden;
eine Empfangseinheit (124), die dafür ausgelegt ist, ein ACK, das dem Umschalten zustimmt, von mindestens einem normalen EN zu empfangen; und
eine Umschaltanweisungseinheit (126), die dafür ausgelegt ist, die Umschalteinheit anzuweisen, die L2C-Verbindung an den normalen EN zu übergeben, der das durch die Empfangseinheit empfangene ACK sendet.

13. System nach Anspruch 12, ferner umfassend:
eine Auswahleinheit (125), die dafür ausgelegt ist, einen dieser normalen EN auszuwählen, wenn die Empfangseinheit das ACK, das Zustimmung zu dem Umschalten bedeutet, von mindestens zwei normalen EN empfängt; und
die Umschaltanweisungseinheit, die dafür ausgelegt ist, die Umschalteinheit anzuweisen, die L2C-Verbindung an den durch die Auswahleinheit ausgewählten normalen EN zu übergeben.

## Revendications

1. Procédé pour la protection contre les défaillances de la commande de couche 2, L2C, dans lequel sont effectués :
la détection d'un noeud d'extrémité, EN, et/ou d'une connexion au noeud EN dans un réseau d'accès, et
s'il y a détection d'une défaillance d'une connexion de commande L2C sur un premier noeud EN, la commutation de la connexion de commande L2C sur le premier noeud EN vers un noeud EN normal pour mettre en oeuvre une redondance de type « 1 + 1 » ou un partage de la charge du premier noeud EN, ou encore une redondance de type « N + 1 » ou un partage de la charge du premier noeud EN, dans lequel la commutation de la connexion de commande L2C sur le premier noeud EN vers un noeud EN normal comprend la commutation de la connexion de commande L2C sur la connexion bidirectionnelle entre le premier noeud EN et un noeud d'accès, AN, vers la connexion bidirectionnelle entre un noeud EN normal et le noeud AN,
**caractérisé en ce que**
la détection de la défaillance de la connexion de commande L2C sur le premier noeud EN comprend :
la détection de la défaillance de la connexion réseau entre le premier noeud EN et le noeud AN, et
dans lequel, avant la commutation de la connexion de commande L2C sur la connexion bidirectionnelle entre le premier noeud EN et le noeud AN vers la connexion bidirectionnelle entre un noeud EN normal et le noeud AN, le procédé comprend en outre un échange de paquets entre le noeud AN et le premier noeud EN au travers de la connexion bidirectionnelle entre le noeud AN et le noeud EN normal et de la connexion bidirectionnelle entre le noeud EN normal et le premier noeud EN, ou
la détection de la défaillance de la connexion réseau entre le premier noeud EN et le réseau central ou la détection du fait que le premier noeud EN est surchargé, et
dans lequel, avant la commutation de la connexion de commande L2C sur la connexion bidirectionnelle entre le premier noeud EN et le noeud AN vers la connexion bidirectionnelle entre un noeud EN normal et le noeud AN, le procédé comprend en outre l'envoi de paquets depuis le noeud AN vers le noeud EN normal au travers de la connexion unidirectionnelle allant du noeud AN jusqu'au premier noeud EN et de la connexion unidirectionnelle allant du premier noeud EN jusqu'au noeud EN normal.

2. Procédé selon la revendication 1, dans lequel le noeud EN dans le réseau d'accès est un serveur d'accès à large bande ou une passerelle de réseau à large bande, BNG.

3. Procédé selon la revendication 1, dans lequel la détection du noeud EN et/ou de la connexion au noeud EN dans le réseau d'accès comprend :
la détection du noeud EN et/ou de la connexion au noeud EN dans le réseau d'accès en utilisant un mécanisme de type connexion persistante d'un protocole de commande de couche 2, L2CP.

4. Procédé selon la revendication 1, dans lequel la commutation de la connexion de commande L2C sur le premier noeud EN vers le noeud EN normal comprend :
l'envoi d'informations d'état dans le premier noeud EN vers le noeud EN normal au travers d'un point de référence ou d'une connexion entre le premier noeud EN et le noeud EN normal.

5. Procédé selon la revendication 1, dans lequel, avant l'étape de commutation de la connexion de commande L2C sur le premier noeud EN vers un noeud EN normal, le procédé comprend en outre :
l'envoi, grâce à un contrôleur connecté au premier noeud EN, d'une demande de commutation de la connexion de commande L2C vers le noeud EN normal lors de la détection de la défaillance de la connexion de commande L2C sur le premier noeud EN,
si le noeud EN normal reçoit une instruction autorisant la commutation depuis le noeud AN et alloue des ressources nécessaires pour la commutation de la connexion de commande L2C, l'envoi, par le noeud EN normal, d'une instruction pour une commutation vers le noeud EN normal au premier noeud EN, ou
l'envoi, par le noeud EN normal, d'un accusé de réception ACK autorisant la commutation vers le contrôleur, et
l'envoi, par le contrôleur, d'une instruction pour une commutation vers le noeud EN normal au premier noeud EN après avoir reçu l'accusé de réception ACK qui signifie l'accord pour la commutation.

6. Procédé selon l'une quelconque des revendications 1 à 4, dans lequel la détection de la défaillance de la connexion de commande L2C sur le premier noeud EN comprend :
la détection d'une défaillance d'une connexion réseau entre le premier noeud EN et un contrôleur, ou
la détection d'une défaillance d'une connexion réseau entre le premier noeud EN et un réseau central,
ou bien la détection du fait que le premier noeud EN est surchargé, et
dans lequel la commutation de la connexion de commande L2C sur le premier noeud EN vers le noeud EN normal comprend :
la commutation de la connexion de commande L2C sur la connexion bidirectionnelle entre le premier noeud EN et le contrôleur vers la connexion bidirectionnelle entre le noeud EN normal et le contrôleur.

7. Procédé selon la revendication 6, dans lequel la détection de la défaillance de la connexion de commande L2C sur le premier noeud EN comprend :
la détection de la défaillance de la connexion réseau entre le premier noeud EN et le contrôleur, et
avant l'étape de commutation de la connexion de commande L2C sur le premier noeud EN vers un noeud EN normal, le procédé comprend en outre :
l'échange de paquets entre le contrôleur et le premier noeud EN au travers de la connexion bidirectionnelle entre le contrôleur et le noeud EN normal et d'une connexion bidirectionnelle entre le noeud EN normal et le premier noeud EN, ou
dans lequel la détection de la défaillance de la connexion de commande L2C sur le premier noeud EN comprend :
la détection de la défaillance de la connexion réseau entre le premier noeud EN et le réseau central ou la détection du fait que le premier noeud EN est surchargé, et
l'étape de commutation de la connexion de commande L2C sur le premier noeud EN vers un noeud EN normal, le procédé comprend en outre :
l'envoi de paquets depuis le contrôleur vers le premier noeud EN au travers de la connexion unidirectionnelle allant du contrôleur jusqu'au premier noeud EN et de la connexion unidirectionnelle allant du premier noeud EN jusqu'au noeud EN normal.

8. Procédé selon la revendication 6, dans lequel, avant l'étape de commutation de la connexion de commande L2C sur le premier noeud EN vers un noeud EN normal, le procédé comprend en outre :
l'envoi, par le contrôleur, d'une demande de commutation de la connexion de commande L2C vers le noeud EN normal après la détection d'une défaillance du premier noeud EN,
l'envoi, par le noeud EN normal, d'un accusé de réception ACK qui signifie l'accord pour la commutation vers le contrôleur, si le noeud EN normal alloue des ressources nécessaires à la commutation de la connexion de commande L2C, et
l'envoi, par le contrôleur, d'une instruction pour une commutation vers le noeud EN normal au premier noeud EN après la réception de l'accusé de réception ACK qui signifie l'accord pour la commutation.

9. Procédé selon l'une quelconque des revendications 5 ou 8, dans lequel l'envoi de la demande de commutation comprend : l'envoi, par le contrôleur ou par le premier noeud EN, de la demande de commutation vers au moins deux noeuds EN normaux, et s'il y a réception, par le contrôleur ou par le premier noeud EN, de l'accusé de réception ACK signifiant l'accord pour la commutation en provenance d'au moins deux noeuds EN normaux, la sélection de l'un de ces noeuds EN normaux et la commutation de la connexion de commande L2C vers le noeud EN normal sélectionné.

10. Système pour la protection contre les défaillances d'une connexion de la commande de couche 2, L2C, comprenant :
une unité de détection (121), conçue pour détecter un noeud d'extrémité, EN, et/ou une connexion à un noeud EN dans un réseau d'accès, et
une unité de commutation (122), conçue pour effectuer la commutation d'une connexion de commande L2C sur un premier noeud EN vers un noeud EN normal s'il est détecté une défaillance de la connexion de commande L2C sur le premier noeud EN, de manière à mettre en oeuvre une redondance de type « 1 + 1 » ou un partage de la charge du premier noeud EN, ou bien une redondance de type « N + 1 » ou un partage de la charge du premier noeud EN,
**caractérisé en ce que**
si le premier noeud EN est en défaut en raison de la défaillance de la connexion réseau entre le premier noeud EN et le noeud AN, la connexion de commande L2C est remplacée par la connexion bidirectionnelle entre le noeud AN et le noeud EN normal et la connexion bidirectionnelle entre le noeud EN normal et le premier noeud EN avant que la commutation soit achevée, et
si le premier noeud EN est en défaut en raison de la défaillance de la connexion entre le premier noeud EN et le réseau central ou bien de la surcharge du premier noeud EN, la connexion de commande L2C consiste en une connexion unidirectionnelle allant du noeud AN jusqu'au premier noeud EN et en une connexion unidirectionnelle allant du premier noeud EN jusqu'au noeud EN normal avant que la commutation soit achevée.

11. Système selon la revendication 10, dans lequel un point de référence ou une connexion est établi(e) entre le premier noeud EN et le noeud EN normal, et l'unité de commutation comprend :
une sous-unité de transmission d'informations, conçue pour envoyer des informations d'état dans le premier noeud EN vers le noeud EN normal au travers du point de référence ou de la connexion entre le premier noeud EN et le noeud EN normal.

12. Système selon la revendication 10, comprenant en outre :
une unité de demande (123), conçue pour envoyer une demande de commutation de la connexion de commande L2C à au moins un noeud EN normal,
une unité de réception (124), conçue pour recevoir un accusé de réception ACK signifiant l'accord pour la commutation en provenance d'au moins un noeud EN normal, et
une unité d'instruction de commutation (126), conçue pour ordonner à l'unité de commutation d'effectuer un transfert de la connexion de commande L2C vers le noeud EN normal, qui envoie l'accusé de réception ACK reçu par l'unité de réception.

13. Système selon la revendication 12, comprenant en outre :
une unité de sélection (125), conçue pour sélectionner l'un de ces noeuds EN normaux lorsque l'unité de réception reçoit l'accusé de réception ACK qui signifie l'accord pour la commutation depuis au moins deux noeuds EN normaux, et
l'unité d'instruction de commutation, conçue pour ordonner à l'unité de commutation d'effectuer un transfert de la connexion de commande L2C vers le noeud EN normal sélectionné par l'unité de sélection.
